# EUROPEAN PATENT APPLICATION

(11) **EP 1 164 587 A1**
(43) Date of publication of application: **19.12.2001**
(21) Application number: 01300316.5
(22) Date of filing: 15.01.2001
(51) Int. Cl.: G11B 19/28

(54) **Method for controlling number of rotation of optical disc and optical disc recording device**

(30) Priority: 12.06.2000 JP 2000175949
(71) Applicant: SAMSUNG ELECTRONICS CO., LTD., Suwon-City, Kyungki-do (KR)
(72) Inventor: Yoshida, Tohru, Kami-gun, Miyagi Pref. (JP)
(74) Representative: Chugg, David John

(57) **Abstract**

Disclosed is a method for controlling the rate of rotation of an optical disc and an optical disc recording device, thereby efficiently using the performance of the optical disc. A CPU (1) reads out management information (a maximum address value) of a record region of the farthest end against the center of the optical disc (8), from the optical disc (8). A distance from the center of the optical disc (8) to the farthest circumference of the record region is calculated based on the read-out maximum address value. The rate of rotation is calculated based on the calculated distance so that the recorded data rate of the record region of the farthest circumference can be the maximum value in the optical disc (8) and therefore is set to be used for a servo controller (5).

## Description

The present invention generally relates to a device and method for controlling the rate of rotations in an optical disc recording device.

At present, recordable optical discs (shortly named an "optical disc" herein below) such as compact disc recordable media (CD-R), compact disc rewritable media (CD-RW), are widely used as recording media for preserving data in personal computers, or the like. An optical disc recording device reading and recording data from/to an optical disc generally employs well known methods, for example, a constant linear velocity (CLV) recording method in which data are recorded by securing a constant linear velocity of an optical disc or a constant angular velocity (CAV) recording method in which data are recorded by securing a constant number of rotation of an optical disc.

A memory region of the optical disc includes a plurality of record tracks of concentric circular shape or spiral shape. The CD-R or CD-RW needs to record data by securing a constant recording density in record regions of entire circumference. Thus, in case of the CAV recording method controlling the constant rate of rotation, a record capacity per one round in record regions of outer circumference is larger than that in record regions of inner circumference. In other words, a data volume (recorded data rate) recorded on the optical disc per unit time in the CAV recording method is larger in the outer circumference of the optical disc than in the inner circumference of the optical disc. The CAV recording method can record the data in the record regions of the entire circumference without varying the rate of rotation of the optical disc. Therefore, the CAV recording method has an advantage of controlling a motor, which rotates the optical disc, with ease when randomly recording the data in the record regions.

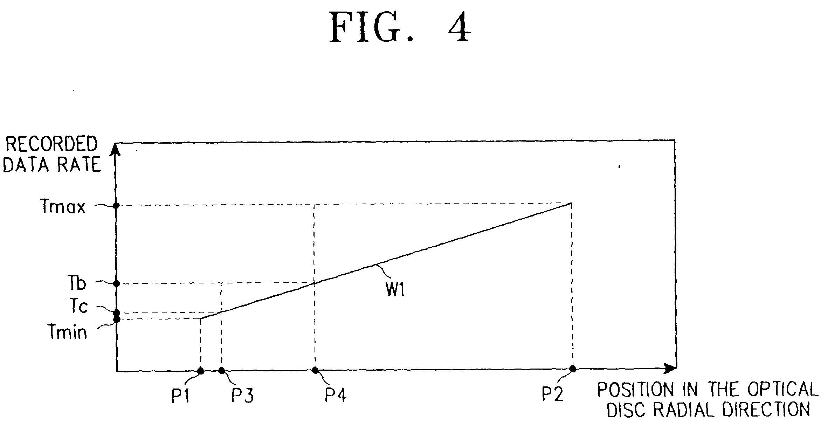

Figure 4 shows a waveform used for explaining a process for controlling the number of rotation of an optical disc in the related art.

Referring to Figure 4, a horizontal axis represents positions of record regions of respective circumferences in the optical disc radial direction. A dot P1 is a position of the innermost circumference of the optical disc, while a dot P2 is a position of the outermost circumference of the optical disc. A longitudinal axis shows recorded data rates. A reference number W1 is a waveform representing the recorded data rates corresponding to the regions of the respective circumferences. The recorded data rate of the innermost circumference is Tmin, the minimum value, while the recorded data of the outermost circumference is Tmax, the maximum value.

According to the related method for controlling the number of rotation of the optical disc, the number of rotation of the optical disc is determined so that the recorded data rate of the outermost circumference of the optical disc can be the maximum value Tmax, as shown in the waveform W1 of the Figure 4. For example, based on the Hi-Speed standard, the recorded data rates with respect to the entire circumferences are secured to be in the range of 600kb/s to 1500kb/s when recording the data on the disc. Among the values, the recorded data rate of the optical disc outermost circumference is the maximum, 155kb/s, which is determined to be the number of rotation during the data record. The number of rotation is pre-determined based on the outermost length of the optical disc, which is obtained in a physical manner from the shape of the optical disc, and is set to be used for the optical disc recording device.

The method for controlling the number of rotation of the optical disc of the related art obtains the recorded number of rotation from the shape of the optical disc, but encounters the following difficulties.

An optical disc, such as the CD-RW disc based on the Hi-Speed standard, is secured with the maximum value of the recorded data rate with respect to the entire circumferences of the disc. If a format is thus carried out to record data in some specific regions, and in particular in regions around the inner circumference, a drastically smaller value rather than the maximum is recorded as the recorded data rate, even if the maximum value would be able to be recorded as the recorded data rate of the optical disc.

For example, if the rate of rotation of the optical disc is determined, so that the recorded data rate of the outermost circumference of the optical disc can be the maximum value, and further the format regions of the optical disc is in the vicinity of the dots P3 to P4 in Figure 4, the recorded data rate of the record region, dot P3 becomes Tc, and the recorded data rate of the record region of dot P4 is Tb, smaller than the maximum Tmax of the recorded data rate of the optical disc. As a result, the performance of the optical disc can not be efficiently used.

It is, therefore, an aim of embodiments of the present invention to provide a method for controlling the rate of rotation of an optical disc and to provide an optical disc recording device, which can efficiently utilise the performance of the optical disc.

According to a first aspect of the invention, there is provided a method for controlling the rate of rotation of an optical disc in an optical disc recording device, the method comprising the steps of:
recording data on a specified record region of the optical disc and rotating the disc at a constant rate of rotation during recording within the specified record region; and
determining said rate of rotation dependant on a position of an outermost circumferential part of the specified record region with respect to the center of the optical disc.

The method may further comprise the steps of:
reading position information representing the position of the outermost circumferential part of the specified record region of the optical disc; and
calculating a distance from the center of the optical disc to the farthest circumference of the record region based on the read-out information.

The method may further comprise the step of obtaining the rate of rotation so that the recorded data rate of the specified record region of the farthest circumference is a maximum permissible value based on the calculated distance.

Preferably, the specified record region is a region where a format is carried out so as for the data to be recorded among record regions of the optical disc.

Preferably, the position information is an address value corresponding to the outermost circumference recorded on the optical disc by the format.

According to a second aspect of the invention, there is provided an optical disc recording device for recording data on a record region of an optical disc by securing a constant rate of rotation of the optical disc, the device comprising:
means for reading position information of the outermost circumferential part of a specified record region of the optical disc;
means for calculating a distance from the center of the optical disc to the outermost circumferential part of the specified record region based on the read-out position information; and
means for calculating a rate of rotation so that the recorded data rate of the specified record region can be at a maximum value based on the calculated distance.

For a better understanding of the invention, and to show how embodiments of the same may be carried into effect, reference will now be made, by way of example, to the accompanying diagrammatic drawings in which:
Figure 1 is a block diagram illustrating a construction of an optical disc recording device according to a preferred embodiment of the present invention;
Figure 2 is a flow chart illustrating a process performed by a CPU in Figure 1;
Figure 3 illustrates a waveform used for explaining a process for controlling the number of rotation of an optical disc in the optical disc recording device in Figure 1; and
Figure 4 illustrates a waveform used for explaining a process for controlling the number of rotation of an optical disc in an optical disc recording device of a related art.

A preferred embodiment of the present invention will be described herein below with reference to the accompanying drawings. In the following description, well-known functions or constructions are not described in detail since they would obscure the invention in unnecessary detail.

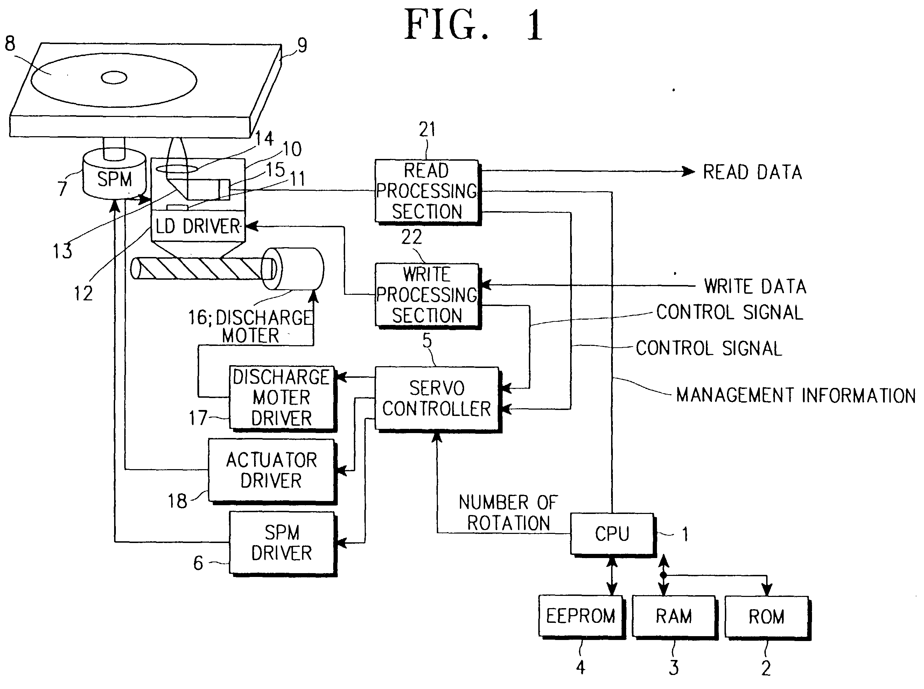

Figure 1 is a block diagram illustrating a construction of an optical disc recording device according to a preferred embodiment of the present invention.

The optical disc recording device employs a constant angular velocity (CAV) recording method to record data by securing a constant rate of rotation of an optical disc.

Referring to Figure 1, reference number 1 represents a central processing unit (CPU) for controlling each block; reference number 2 represents a read-only memory (ROM) for storing programs performed by the CPU1 therein; reference number 3 represents a random access memory for temporally memorizing data; and reference number 4 represents a recordable fixed memory for maintaining management data even when power is off, here, using an EEPROM. The CPU1 and various signals inputted or outputted between blocks are not drawn in Figure 1.

Reference number 5 represents a servo controller for controlling a discharge motor 16, actuator (not drawn), and a spindle motor (SPM) 7 based on an inputted control signal or the number of rotation of the disc. Reference number 6 represents a SPM driver for driving the SPM 7 according to the control signal inputted from the servo controller 5 and rotating the optical disc 8. Reference number 9 represents a tray for supporting the optical disc 8. Furthermore, the optical disc 8 is a recordable optical disc, i.e., compact disc recordable media (CD-R), compact disc rewritable media (CD-RW), etc. The record regions of the optical disc 8 include record tracks of spiral shape or concentric circular shape.

Reference number 10 represents a pickup for reading out and recording with respect to the optical disc 8, comprising a semiconductor laser (LD) 11 acting as a light element; a LD driver 12 for driving the LD 11 according to a light control signal inputted from a write processing section 22 and emitting lights; a mirror 13 for transmitting lights emitted from the LD 11 and reflecting the lights emitted from the LD 11 to the optical disc 8; an object lens 14 for focusing the lights; a light receiver 15 for receiving the lights reflected by the mirror 13 and converting the same into an electric signal; and an actuator, which is not drawn, for controlling a position of the object lens 14 so that the lights emitted from the LD 11 can be focused on the optical disc 8. The recording of the data is performed on the optical disc 8 according to the lights outputted from the LD 11 in the pickup 10, whereas the reading-out of the data from the optical disc 8 is performed by receiving the reflected lights of the optical disc 8 by the light receiver 15.

Reference number 16 represents the discharge motor for moving the pickup 10; reference number 17 representing a discharge motor driver for driving the discharge motor 16 according to the control signal inputted from the servo controller; and a reference number 18 representing an actuator driver for driving the actuator according the control signal inputted from the servo controller.

Reference number 21 is a read processing section for restoring the data recorded on the optical disc 8 and outputting the same as a read data based on the signal inputted from the light receiver 15 in the pickup 10. Further, the read processing section 21 generates an actuator control signal and outputs the same to the servo controller 5 based on the signal inputted from the light receiver 15. Among the data recorded on the optical disc 8, the management information is outputted to the CPU. The management information means information on the record regions of the optical disc, i.e., address values corresponding to the respective record regions of the plurality of circumferences in the optical disc 8, sizes of regions formatted to be recordable, etc. The address values are position information representing addresses of the respective record regions.

Reference number 22 is a write processing section for generating a light control signal based on inputted write data and outputting the same to the LD driver 12 in the pickup 10. The write processing section 22 generates a control signal for recording data on the optical disc 8 and outputs the same to the servo controller 5. Also, the write processing section 22 outputs a light control signal for reading out data to the LD driver 12 except the case where the data are recorded on the optical disc 8.

In the above-stated optical disc recording device in Figure 1, the recorded number of rotations of the disc is calculated by the CPU and set to be used for the servo controller 5 when recording the data on the optical disc 8. The servo controller 5 rotates the optical disc 8 at a pre-set number of rotation of the disc when recording the data in the record regions of the entire circumferences of the optical disc. Further, the write processing section 22 generates the light control signal so as to record the data by securing a constant recording density within the record regions of the entire circumferences of the optical disc 8. The write data is recorded on the optical disc 8 by means of the lights outputted from the LD 11 driven by the LD 12 according to the light control signal.

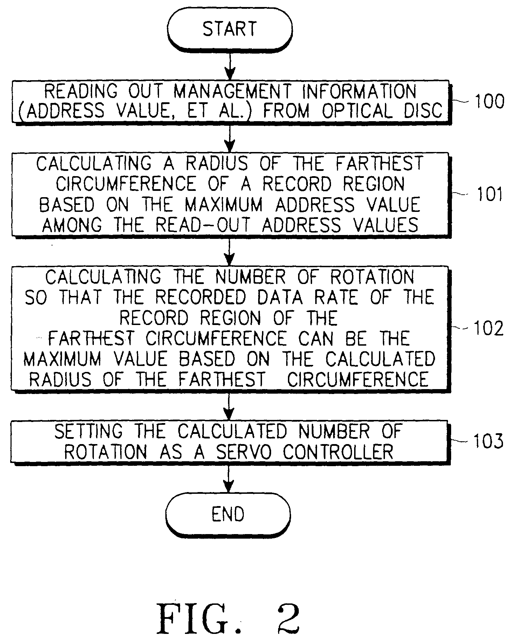

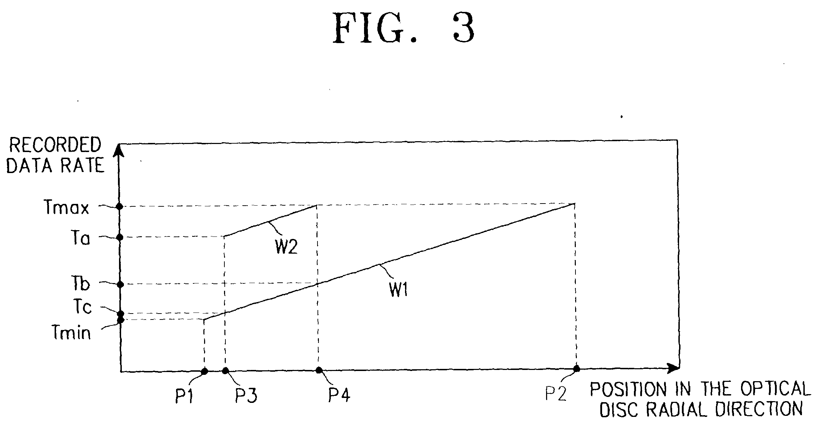

Next, a process for calculating the rate of rotation of a disc when an optical disc recording device records data on an optical disc 8 will be described with reference to Figure 1 to Figure 3. Figure 2 is a flow chart illustrating the process performed by a CPU. Figure 3 illustrates a waveform used for explaining the process for controlling the number of rotation of the optical disc in the optical disc recording device in Figure 1.

Referring to Figure 3, a horizontal axis represents positions of record regions of respective circumferences of an optical disc in the optical disc radial direction.

Here, a dot P1 represents a position of an innermost circumference of the optical disc, while a dot P2 represents a position of an outermost circumference of the optical disc. A longitudinal axis shows recorded data rates. Reference numbers W1 and W2 represent waveforms illustrating the recorded data rates corresponding to the regions of the respective circumferences. The recorded data rate of the innermost circumference is Tmin, the minimum value, whereas the recorded data of the outermost circumference is Tmax, the maximum value. Here, the waveform W1 is a waveform obtained by the method for controlling the number of rotation of the optical disc according to the related art. The recorded data rates mean the volume of data recorded on the optical disc per unit time.

Initially, a format is carried out on the optical disc 8 so as the data to be recorded. The position between dots P3 to P4 in Figure 3 is referred to as a data recordable format (record) region. Address values representing positions of the respective record regions of the plural circumferences or sizes of the record regions are recorded on the optical disc 8 by the format as management information. Here, address values corresponding to memory regions of outer circumference is larger than those corresponding to memory regions of inner circumference. The optical disc 8 is secured with the minimum Tmin to the maximum Tmax in the entire circumferences of the disc due to the characteristics of the recorded data rate.

After the optical disc 8 mounted on the tray 9 is set to be used for the optical disc recording device, the CPU reads out the management information from the optical disc 8 in step 100 of Figure 2. Next, the CPU calculates a radius of the farthest circumference of the record region of the optical disc 8 based on the maximum address value corresponding to the record region of the outermost circumference among the address values of the read-out management information in step 101. The calculated radius of the farthest circumference is a distance corresponding to the position of the dot P4 in Figure 3, namely a distance from the center of the optical disc 8 to the farthest circumference of the record region.

Thereafter, the CPU calculates the recorded number of rotation of the optical disc based on the calculated radius of the farthest circumference, so that the recorded data rate of the record region of the farthest circumference (dot P4) can be the maximum value Tmax of the optical disc 8. Then, the CPU sets the calculated number of rotation to be used for the servo controller 5 in step 103.

The waveform W2 in Figure 3 is a waveform representing the recorded data rate corresponding to the record regions of the each circumference with respect to the optical disc 8 based on the calculated number of rotation of the disc. In the waveform W2, the recorded data rate of the record region of the dot P3 is Ta and the recorded data rate of the record region of the dot P4 is the maximum value Tmax, larger than the edge value of the waveform W1. As a result, the performance of the optical disc is able to be used to the maximum.

As stated, whenever the optical disc is set to to the optical disc recording device, the recorded number of rotation is varied according to the position of the record region of the farthest end from the center of the optical disc, thereby efficiently using the performance of the optical disc.

Further, if the optical disc 8 is formatted in the entire circumferences from the dot P1 to the dot P3 in Figure 2, the maximum address value read out from the optical disc 8 represents the position of the dot P2. The number of rotation calculated based on the maximum address value is identical with the number of rotation obtained by the method for controlling the number of rotation of the optical disc according to the related art. Consequently, the waveform representing the recorded data rate corresponding to the record region of the each circumference with respect to the optical disc 8 becomes the waveform W1 in Figure 4. Thus, it is out of question that the present invention efficiently uses the performance of the optical disc more than the related art. In particular, the position of the record region of the farthest end from the center of the optical disc is located in the inner circumference of the optical disc, thereby obtaining more advantageous effect.

The CPU calculates the rate of rotation of the disc according to the preferred embodiment of the present invention. However, the number of rotation of the disc can be obtained by means of a dedicated hardware.

Furthermore, the method for securing the constant number of rotations of the optical disc according to the preferred embodiment is applicable to other optical disc recording devices except the CD-R disc or CD-RW disc.

Particularly, the method is effectively applicable to an optical disc recording device, which has a ROM region as its outer circumference and a rewritable record region as its inner circumference in the Hi-Brid format.

As stated above, according to embodiments of the present invention, the optical disc recording device for recording the data on the record regions of the optical disc by securing the constant rate of rotation of the optical disc varies the rate of rotation according to the position of the record region of the farthest end from the center of the optical disc, thereby serving to efficiently using the performance of the optical disc.

The rate of rotation is obtained so that the recorded data rate of record region of the farthest circumference can be the maximum value based on the calculated distance, thereby using the performance of the optical disc to the maximum.

While the invention has been shown and described with reference to a certain preferred embodiment thereof, it will be understood by those skilled in the art that various changes in form and details may be made therein without departing from the spirit and scope of the invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A method for controlling the rate of rotation of an optical disc in an optical disc recording device, the method comprising the steps of:
recording data on a specified record region of the optical disc and rotating the disc at a constant rate of rotation during recording within the specified record region; and
determining said rate of rotation dependant on a position of an outermost circumferential part of the specified record region with respect to the center of the optical disc.

2. The method of claim 1, further comprising the steps of:
reading position information representing the position of the outermost circumferential part of the specified record region of the optical disc; and
calculating a distance from the center of the optical disc to the farthest circumference of the record region based on the read-out information.

3. The method of claim 1 or 2, further comprising the step of obtaining the rate of rotation so that the recorded data rate of the specified record region of the farthest circumference is a maximum permissible value based on the calculated distance.

4. The method of claim 1, 2 or 3 wherein the specified record region is a region where a format is carried out so as for the data to be recorded among record regions of the optical disc.

5. The method of claim 4, wherein the position information is an address value corresponding to the outermost circumference recorded on the optical disc by the format.

6. An optical disc recording device for recording data on a record region of an optical disc by securing a constant rate of rotation of the optical disc, the device comprising:
means (21) for reading position information of the outermost circumferential part of a specified record region of the optical disc;
means (1) for calculating a distance from the center of the optical disc to the outermost circumferential part of the specified record region based on the read-out position information; and
means (1) for calculating a rate of rotation so that the recorded data rate of the specified record region can be at a maximum value based on the calculated distance.
